Europäisches Patentamt
European Patent Office
Office européen des brevets

(19)

(11) Numéro de publication : **0 376 768 B1**

(12)

# FASCICULE DE BREVET EUROPEEN

(45) Date de publication du fascicule du brevet :
**22.01.92 Bulletin 92/04**

(51) Int. Cl.⁵ : **B60T 11/26,** B60T 17/22

(21) Numéro de dépôt : **89403194.7**

(22) Date de dépôt : **21.11.89**

(54) **Réservoir pour liquide de frein.**

(30) Priorité : **28.12.88 FR 8817298**

(43) Date de publication de la demande :
**04.07.90 Bulletin 90/27**

(45) Mention de la délivrance du brevet :
**22.01.92 Bulletin 92/04**

(84) Etats contractants désignés :
**DE ES FR GB IT**

(56) Documents cités :
**DE-A- 2 501 228**
**FR-A- 2 383 050**
**GB-A- 2 115 528**
**US-A- 3 296 396**

(73) Titulaire : **BENDIX EUROPE Services
Techniques S.A.
126 rue de Stalingrad
F-93700 Drancy (FR)**

(72) Inventeur : **Papiau, Guy
Bendix France S.A. 126 Rue de Stalingrad
F-93700 Drancy (FR)**

(74) Mandataire : **Lejet, Christian
Bendix Europe Service Techniques Service
Brevets 126 rue de Stalingrad
F-93700 Drancy (FR)**

EP 0 376 768 B1

## Description

La présente invention concerne les réservoirs pour liquide de frein sous pression atmosphérique habituellement utilisés dans les véhicules automobiles pour délivrer du liquide de frein aux chambres de pression du maître-cylindre.

On sait que dans un tel réservoir, pour maintenir la pression atmosphérique dans l'espace libre au-dessus du liquide, un orifice doit être pratiqué dans la paroi du réservoir ou dans son bouchon. Or, dans certaines conditions telles qu'une forte accélération, un freinage important, des cahots, il se crée des vagues de liquide dans le réservoir et le liquide a tendance à fuir par un tel orifice, ainsi que par le jeu existant entre le bouchon de remplissage et le col correspondant du réservoir.

Pour pallier cet inconvénient, on a eu recours à des orifices en forme de chicanes contrariant le mouvement du liquide. Bien que permettant d'obtenir un meilleur résultat, ces chicanes ne sont pas totalement satisfaisantes, car elles laissent encore passer un peu de liquide.

Le but de la présente invention est d'obvier à cet inconvénient au moyen d'un élément simple et peu couteux.

L'invention concerne donc un réservoir pour liquide de frein sous pression atmosphérique, présentant dans sa partie supérieure un col sensiblement vertical et cylindrique sur lequel est monté un bouchon de remplissage, et comportant au moins un orifice de mise à l'air libre.

Selon l'invention, il comprend un joint à lèvre souple préformée dont la lèvre, en regard de l'orifice, laisse ouvert ce dernier en position de repos, et un piston, dont une première extrémité est en regard de la lèvre, coulissant librement dans le col de manière à appliquer la lèvre sur l'orifice et fermer ce dernier lorsqu'une force est appliquée sur sa seconde extrémité.

De préférence, la seconde extrémité du piston est pourvue d'un flotteur.

De préférence aussi, la première extrémité du piston comporte un épaulement cylindrique faisant saillie vers l'extérieur et le col est à section intérieure étagée de manière à former butée pour le piston en position de repos et limiter ainsi la course de ce dernier.

Lorsque ce réservoir est équipé d'un dispositif avertisseur constitué par un contact électrique disposé au voisinage du bouchon et commandé au moyen d'un flotteur auquel il est relié par une tige verticale, le piston détermine un moyen de guidage de cette tige verticale, ce qui permet d'éliminer tout autre élément de guidage.

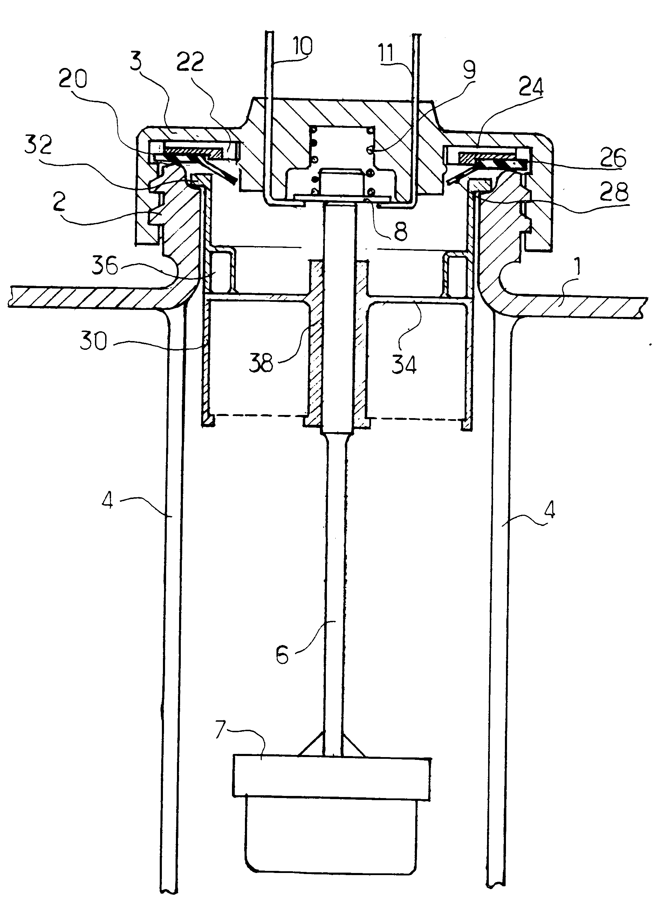

L'invention sera mieux comprise et d'autres buts, avantages et caractéristiques de celle-ci apparaîtront plus clairement à la lecture de la description qui suit d'un mode de réalisation donné à titre non limitatif et à laquelle une planche de dessin est annexée sur laquelle la figure unique représente en coupe, schématiquement et partiellement, la partie supérieure d'un réservoir conforme à la présente invention.

En référence maintenant à cette figure unique, le réservoir est généralement constitué par deux coques en matière plastique scellées ensemble. Le réservoir est raccordé, à sa partie inférieure, aux conduits d'entrée du maître-cylindre, tandis qu'il comporte, à sa partie supérieure, un col 2 sensiblement vertical solidaire de la paroi supérieure 1, et sur lequel est monté un bouchon de remplissage 3. Dans l'exemple représenté, le bouchon 3 coopère avec le col 2 au moyen d'un filetage prévu sur le col 2. Des parois 4 sont prévues à l'intérieur du réservoir pour délimiter des compartiments et limiter les effets de vague.

Dans l'exemple représenté, le bouchon est pourvu d'un dispositif avertisseur permettant de prévenir le conducteur du véhicule si le niveau du liquide de frein dans le réservoir est inférieur à un niveau déterminé minimal considéré comme dangereux. Pour ce faire, une tige 6, solidaire d'un flotteur 7, prend appui sur une rondelle de contact electriquement conductrice 8. Un ressort 9 s'oppose à l'action du flotteur 7 et maintient la rondelle 8 en contact avec un conducteur d'entrée 10 et un conducteur de sortie 11 dès lors que le niveau du liquide est inférieur au niveau minimal prévu.

Une coupelle annulaire 20 disposée dans le bouchon 3 détermine ici une chicane permettant de mettre l'espace libre au-dessus du liquide à la pression atmosphérique extérieure. Cette chicane est constituée par au moins un orifice 22, un conduit radial 24 et le jeu dans le système de fixation du bouchon.

Selon l'invention, on dispose un joint annulaire 26 présentant une lèvre souple 28 en regard de l'orifice 22. Cette lèvre souple 28 est préformée de manière à laisser cet orifice 22 ouvert au repos, permettant ainsi à l'air libre de passer.

Un piston 30 est disposé dans le col 2 de manière à pouvoir coulisser librement.

Une première extrémité 32 de ce piston 30 est en regard de la lèvre souple 28 et, en position de repos, ne vient pas s'appuyer sur cette dernière. Par contre, lorsqu'une force verticale est appliquée à sa seconde extrémité 34, la première extrémité 32 vient appuyer sur la lèvre souple 28 qui ferme alors l'orifice 22, isolant ainsi le réservoir de l'air libre et interdisant au liquide de pénétrer dans cet orifice.

Dans l'exemple représenté, la lèvre 28 vient s'appuyer sur une nervure du bouchon ce qui interdit tout passage vers l'orifice 22 et, par suite ferme l'orifice 22.

Cette force peut être créée soit par une vague venant au contact de la paroi de la seconde extrémité 34, soit encore par une poussée d'Archimède engendrée par un flotteur 36, par exemple annulaire, fixé au voisinage de cette seconde extrémité 34.

De manière à éviter que du liquide de frein stagne au-dessus de la paroi de la seconde extrémité 34, des trous y sont pratiqués pour permettre au liquide arrivant en ce point de retourner dans la partie utile du réservoir.

Dans l'exemple représenté, la tige 6 traverse le piston 30 de part en part de façon sensiblement coaxiale. Un moyen de guidage 38 solidaire du piston, permet un mouvement relatif de coulissement entre la tige 6 et le piston 30 et assure le guidage de cette tige de telle manière qu'il n'est pas nécessaire d'utiliser une autre pièce de guidage comme précédemment, pour éviter que la tige 6 et le flotteur 7 se mettent en biais, ce qui nuirait à la fiabilité du dispositif avertisseur.

De manière à limiter la course du piston 30, la première extrémité 32 du piston en regard de la lèvre 28, comporte un épaulement cylindrique faisant saillie vers l'extérieur. Le col 2 présente, de façon correspondante, une section intérieure étagée de manière à former butée de repos pour le piston. Bien évidemment, tout autre type de butée aurait pu être prévu, notamment au niveau de la jonction du col 2 à la paroi supérieure 1.

D'autres modifications peuvent, bien sur, être apportées à l'invention sans sortir du cadre des revendications annexées. Par exemple, l'Homme de l'Art pourra prévoir de disposer un ressort légèrement précontraint entre le bouchon 3 et le piston 30 de manière à éviter toute fermeture intempestive de l'orifice 22 par la lèvre 28. La seconde extrémité du piston 30 peut être ou non pourvue d'une jupe.

L'Homme de l'Art constatera aisément que la mise en oeuvre de l'invention permet de réduire considérablement l'encombrement d'un tel réservoir. En effet, il n'est plus nécessaire de prévoir un espace important entre le niveau maximal du liquide et l'extrémité supérieure du col 2. Enfin, le réservoir tel que décrit, présente un avantage certain pour l'utilisateur final, puisque, lorsque toutes les pièces — flotteur, piston, joints... — sont liées entre elles, le démontage du bouchon pour remplissage du réservoir et son remontage sont des opérations extrêmement simplifiées au cours desquelles l'utilisateur ne peut pas perdre de pièces.

Selon un autre mode de réalisation, l'arbre 6 n'est pas solidaire de la rondelle de contact 8. Dans ce cas, lors de démontage du bouchon du réservoir, flotteur et piston restent dans le réservoir. La seconde extrémité 34 sera alors judicieusement remplacée par un filtre approprié, ou bien un filtre sera rajouté sous cette seconde extrémité.

## Revendications

1. Réservoir pour liquide de frein sous pression atmosphérique, présentant dans sa partie supérieure un col (2) sensiblement vertical et cylindrique sur lequel est monté un bouchon de remplissage (3), et comportant au moins un orifice de mise à l'air libre (22), caractérisé en ce qu'il comprend un joint (20) à lèvre souple préformée dont la lèvre (28), en regard du dit orifice (22), laisse ouvert ce dernier en position de repos, et un piston (30), dont une première extrémité (32) est en regard de la dite lèvre (28), coulissant librement dans le dit col (2) de manière à appliquer la dite lèvre (28) sur le dit orifice (22) et fermer ce dernier lorsqu'une force est appliquée sur sa seconde extrémité (34).

2. Réservoir selon la revendication 1, caractérisé en ce que la dite seconde extrémité (34) du dit piston (30) est pourvue d'un flotteur (36).

3. Réservoir selon la revendication 1 ou 2, caractérisé en ce que la dite première extrémité (32) du dit piston (30) comporte un épaulement cylindrique faisant saillie vers l'extérieur et que le dit col (2) est à section intérieure étagée de manière à former butée pour le dit piston (30) en position de repos et limiter ainsi la course de ce dernier.

4. Réservoir selon l'une quelconque des revendications précédentes, équipé d'un dispositif avertisseur constitué par un contact électrique (8, 10, 11) disposé au voisinage du dit bouchon (3) et commandé au moyen d'une tige verticale (6) reliée à un flotteur (7), caractérisé en ce que le dit piston détermine un moyen de guidage (38) de la dite tige verticale (6).

5. Réservoir selon l'une quelconque des revendications précédentes, caractérisé en ce que la dite seconde extrémité (34) comporte un filtre.

## Patentansprüche

1. Bremsflüssigkeitsbehälter, der unter Atmosphärendruck steht und der in seinem oberen Teil einen im wesentlichen vertikalen und zylindrischen Hals (2), an dem ein Einfüllverschluß (3) angebracht ist, und wenigstens eine Öffnung (22) ins Freie aufweist, dadurch gekennzeichnet, daß er eine vorgeformte elastische Lippendichtung (20), deren gegenüber der Öffnung (22) befindliche Lippe (28) diese Öffnung in der Ruhestellung geöffnet läßt, und einen Kolben (30) aufweist, dessen erstes Ende (32) sich gegenüber der Lippe (28) befindet und der im Hals frei verschiebbar ist, derart, daß er die Lippe (28) gegen die Öffnung (22) drückt und die letztere schließt, wenn auf das zweite Ende (34) eine Kraft ausgeübt wird.

2. Behälter gemäß Anspruch 1, dadurch gekennzeichnet, daß das zweite Ende (34) des Kolbens (30) mit einem Schwimmer (36) versehen ist.

3. Behälter gemäß Anspruch 1 oder 2, dadurch gekennzeichnet, daß das erste Ende (32) des Kolbens (30) einen nach außen vorspringenden zylindrischen Ansatz aufweist und daß der Hals (2) in seinem Innenbereich gestuft ist, derart, daß für den Kolben (30) in seiner Ruheposition ein beschlag gebildet wird und somit der Weg des letzteren begrenzt wird.

4. Behälter gemäß einem der vorangehenden Ansprüche, der mit einer Warnsignal-Einrichtung ausgerüstet ist, die von einem in der Umgebung des Verschlußes (3) angeordneten und mittels eines mit einem Schwimmer (7) verbundenen vertikalen Stabes (6) gesteuerten elektrischen Kontakt (8, 10, 11) gebildet wird, dadurch gekennzeichnet, daß der Kolben ein Führungsmittel (38) des vertikalen Stabes (6) festlegt.

5. Behälter gemäß einem der vorangehenden Ansprüche, dadurch gekennzeichnet, daß das zweite Ende (34) ein Filter aufweist.

## Claims

1. Reservoir for brake fluid under atmospheric pressure, having in its upper part a substantially vertical and cylindrical neck (2), on which a filling plug (3) is mounted, and possessing at least one orifice for communication with the free air (22), characterized in that it comprises a preformed flexible lip gasket (20), of which the lip (28) facing the said orifice (22) leaves the latter open in the rest position, and a piston (30), a first end (32) of which is opposite the said lip (28) and which slides freely in the said neck (2), so as to lay the said lip (28) over the said orifice (22) and close the latter when a force is exerted on its second end (34).

2. Reservoir according to Claim 1, characterized in that the said second end (34) of the said piston (30) is equipped with a float (36).

3. Reservoir according to Claim 1 or 2, characterized in that the said first end (33) of the said piston (30) possesses a cylindrical shoulder projecting outwards, and in that the said neck (2) has an inner cross-section stepped so as to form a stop for the said piston (30) in the rest position and thus limit the stroke of the latter.

4. Reservoir according to any one of the preceding claims, equipped with a warning device consisting of an electrical contact (8, 10, 11) located in the vicinity of the-said plug (3) and controlled by means of a vertical rod (6) connected to a float (7), characterized in that the said piston defines a means (38) for guiding the said vertical rod (6).

5. Reservoir according to any one of the preceding claims, characterized in that the said second end (34) possesses a filter.